# DEMANDE DE BREVET EUROPEEN

(11) **EP 1 450 140 A1**
(43) Date de publication de la demande: **25.08.2004**
(21) Numéro de dépôt: 04290375.7
(22) Date de dépôt: 12.02.2004
(51) Int. Cl.: G01F 23/04

(54) **Jauge de controle de niveau**

(30) Priorité: 21.02.2003 FR 0302143
(71) Demandeur: Renault s.a.s., 92100 Boulogne Billancourt (FR)
(72) Inventeur: Delaigue, Laurent, 92130 Issy Les Moulineaux (FR)
(74) Mandataire: Rougemont, Bernard

(57) **Abrégé**

Jauge de contrôle de niveau, notamment pour véhicule, comportant d'une part un guide de jauge tubulaire (1) présentant à son extrémité supérieure une embouchure (7), et d'autre part une tige de contrôle de niveau (2) comprenant un tronçon inférieur (12) de mesure raccordé par un tronçon supérieur (13) au moins partiellement incurvé à un embout de fermeture (14) du guide, caractérisée en ce que le guide (1) présente un au moins un épaulement intermédiaire (4) coopérant avec une butée (16) de la tige (2) pour assurer le centrage de celle-ci dans le guide.

## Description

La présente invention concerne les jauges de contrôle de niveau, notamment celles qui sont disposées sur le bloc moteur des véhicules en vue de contrôler le niveau d'huile à l'intérieur de celui-ci.

Plus précisément, elle concerne une jauge de contrôle de niveau, notamment pour véhicule, comportant d'une part un guide de jauge tubulaire présentant à son extrémité supérieure une embouchure, et d'autre part une tige de contrôle de niveau comprenant un tronçon inférieur de mesure raccordé par un tronçon supérieur au moins partiellement incurvé, à un embout de fermeture du guide

Lorsque l'environnement moteur nécessite la mise en place d'un guide de jauge de grande longueur avec un parcours non rectiligne, il est nécessaire de veiller à ce que la vidange par aspiration et le remplissage d'huile en après-vente par le guide de jauge, restent des opérations facile à exécuter.

Malgré la présence de systèmes de contrôle électroniques du niveau d'huile avec affichage d'alertes au tableau de bord, il est toujours souhaitable de conserver la possibilité de lire directement le niveau d'huile dans le moteur sur une jauge manuelle accessible dans le compartiment moteur.

Lorsque les contraintes de l'environnement obligent à allonger le guide de jauge et à adopter pour celui-ci un parcours non rectiligne, il est courant de recourir à des tubes de jauge souples, faciles à insérer dans le guide. Le problème se pose alors de conserver la même précision lecture que celle qui est obtenue avec des tiges rigides introduites dans des guides de jauge courts et rectilignes.

L'imprécision de lecture de niveau introduite par l'allongement des guides de jauge et la courbure de leur profil résulte d'une part au débattement non maîtrisé de la tige de jauge à l'intérieur du guide, et d'autre part du fait que l'appui de la jauge sur la partie haute du guide ne soit pas réalisé sur un plan parallèle à celui de la nappe d'huile. Ces deux facteurs sont à l'origine de dispersions importantes pour l'immersion des crans de mesure de niveau dans la nappe d'huile, qui se traduisent par une imprécision de mesure difficilement corrigible.

Par la publication JP-200283823, on connaît une jauge à huile, dont la tige vient en butée sur un étranglement du guide de jauge, de manière à positionner en hauteur le secteur inférieur mesure de celle-ci par rapport à la nappe d'huile. Toutefois, cette publication ne prévoit pas de moyens de centrage de la tige dans le tube.

La présente invention vise à améliorer la précision de mesure d'une jauge à huile en associant aux moyens de positionnement en hauteur de la tige, des moyens de centrage dans son guide.

Dans ce but, elle propose que le guide présente au moins un épaulement intermédiaire coopérant avec une butée de la tige pour assurer le centrage de celle-ci.

Selon une autre caractéristique de l'invention, la tige peut porter à proximité de son extrémité supérieure un élément d'étanchéité, dont la position à l'intérieur du tube suit celle de l'embout de fermeture sur l'embouchure du guide.

Par ailleurs, la tige peut présenter au moins un élément additionnel de centrage situé en dessous de la butée.

D'autres caractéristiques et avantages de l'invention apparaîtront clairement à la lecture de la description suivante d'un mode de réalisation particulier de celle-ci, en se reportant au dessin annexé sur lesquels
- la figure 1 montre en coupe la jauge proposée,
- les figures 2 et 4 sont des agrandissements partiels de la figure 1, et
- la figure 3 est une coupe selon 3 de la figure 2

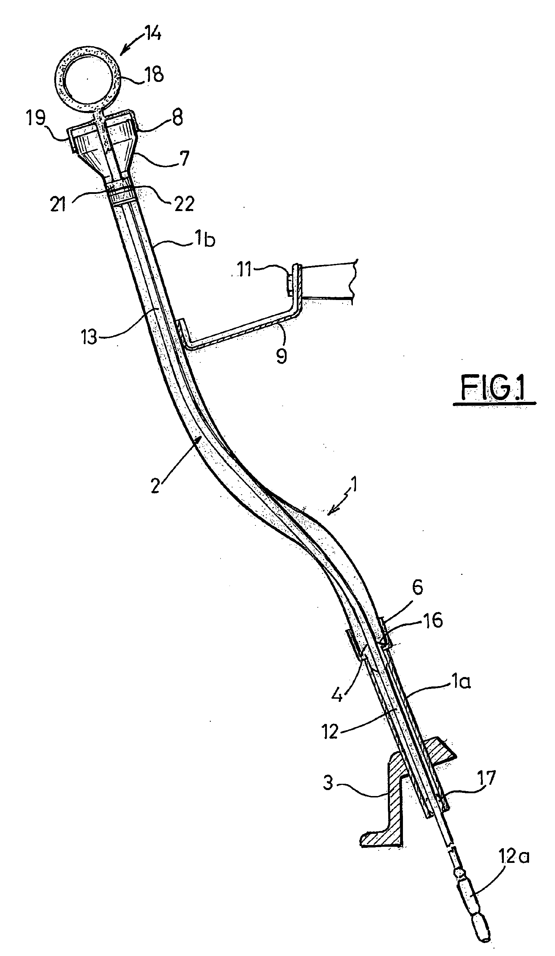

Sur la figure 1, on voit que la jauge faisant l'objet de l'invention est composée de deux parties, à savoir un guide de jauge tubulaire 1, et une tige 2, introduite à l'intérieur de celle-ci.

Le guide 1 est emmanché à l'intérieur du carter cylindre 3 d'un moteur. Il est constitué de deux pièces 1a et 1b, la seconde étant emmanchée dans la première. Au niveau de leur raccordement, le tube présente un épaulement 4. L'épaulement 4 constitue la base d'un élargissement 6 de la pièce inférieure 1a dans lequel est emmanché la pièce supérieure 1b du guide. La pièce 1a présente à son extrémité supérieure une embouchure évasée 7, surmontée d'un secteur d'extrémité cylindrique 8. La pièce supérieure 1b est incurvée sur une partie de sa longueur, alors que la pièce inférieure 1a est rectiligne. Enfin, le guide 1 porte au niveau de sa pièce supérieure 1b une patte de fixation 9, raccordée à une partie fixe du moteur, par une vis 11.

La structure en deux pièces du guide n'a cependant aucun caractère limitatif. Sans sortir du cadre de invention, le guide de jauge peut en effet aussi bien être en une seule pièce ou en un nombre de pièces supérieur à deux.

La tige 2 est constituée de deux tronçons 12, 13 et d'un embout de fermeture 14, coopérant avec l'embouchure 7 du guide. Le tronçon inférieur 12 constitue le secteur de mesure proprement dit de la jauge, présentant par exemple de façon connue des crans de repérage de niveau 12a. Pour que la tige puisse être engagée ou retirée facilement du guide, le tronçon supérieur 13 est souple, au moins sur une partie de sa longueur. Comme indiqué plus haut, cette souplesse lui autorise un certain débattement à l'intérieur du guide, qui est à l'origine d'imprécisions de mesure.

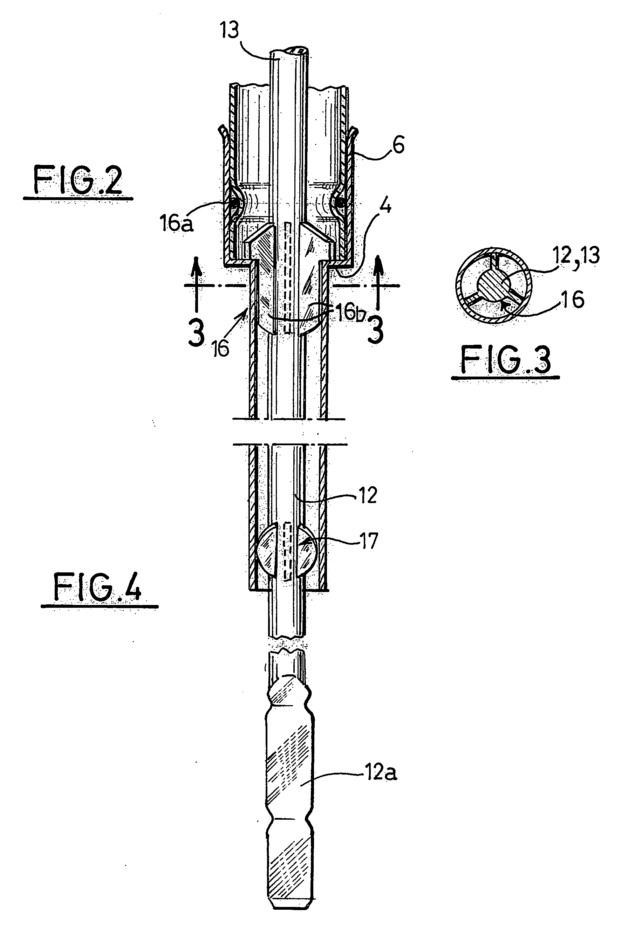

Conformément à l'invention, la tige 2 présente une première butée ou butée principale 16 portant un joint d'étanchéité torique 16a, coopérant avec l'épaulement 4 du guide 1 pour assurer le positionnement en hauteur du tronçon inférieur 12 de la tige 2. En coopération avec l'élément additionnel de centrage 17 situé sur le schéma à proximité de l'extrémité inférieure de la pièce, la butée de centrage 16 assure également le centrage du tronçon 12 dans le tube 1. De façon non limitative la butée de centrage 16 peut avoir la structure montrée par la figure 3, c'est à dire présenter au moins trois lobes radiaux. L'élément additionnel de centrage peut 17 peut aussi présenter une structure analogue.

Selon le mode de réalisation non limitatif illustré par la figure, le tronçon inférieur 12 de la tige 2 portant les crans de mesure 12a, bénéficie donc de deux éléments de centrage 16 et 17 dans le tube 1. Sans sortir du cadre de l'invention, on peut envisager un nombre ou une disposition différente des éléments de centrage additionnels. Toutefois, conformément à l'invention, la butée principale de centrage 16 présente la caractéristique particulière mise en évidence sur le schéma, de prendre appui sur l'épaulement 4 du guide 1, de manière à exercer simultanément les fonctions de positionnement en hauteur et de centrage de la tige dans le guide.

Pour la mise en oeuvre de cette caractéristique, il n'est cependant pas nécessaire que le guide de jauge soit en deux pièces comme dans l'exemple de réalisation non limitatif illustré par la figure. Il faut simplement que la butée principale puisse prendre appui sur un épaulement intérieur 4 du guide 1 pour pouvoir positionner la tige 2 en hauteur. Conformément à l'invention, il suffit donc que le guide présente entre ses deux extrémités un épaulement pour recevoir cet élément de centrage particulier ou butée de centrage 16. De préférence, un second élément de centrage additionnel 17est donc disposé en dessous de la butée principale de centrage à proximité de l'extrémité inférieure du tube.

Les éléments de centrage 16, 17 présentent avantageusement une certaine souplesse. Ils peuvent être pleins, ou selon un mode préférentiel, être constitués d'un assemblage de lobes radiaux, au nombre de trois ou davantage.

L'embout supérieur 14 de la tige, présente de façon conventionnelle un anneau (ou toute autre forme de poignée) de préhension. Conformément à l'invention, il présente un élément de capotage 19 pouvant coulisser sur la partie cylindrique 8 surmontant la partie évasée de l'embouchure, de manière à assurer la fermeture, en dépit des dispersions de longueur apparente de la tige résultant comme indiqué plus haut de la liberté de parcours de la parie souple de la tige, au dessus de la butée de centrage 16.

Enfin, la tige 2 porte, à proximité de son extrémité supérieure, un bouchon de forme générale cylindrique 21 qui est fixé sur celle-ci. La position du bouchon 21 à l'intérieur du tube est déterminée par celle de l'élément de capotage 19 sur l'embouchure du guide qui dépend du trajet de la tige 2 dans le guide 1. Le bouchon 21 présente dans sa partie médiane un joint torique 22 assurant l'étanchéité de la liaison entre le bouchon et le tube, tout en autorisant son déplacement à l'intérieur de celui-ci.

Ainsi la l'étanchéité de la fermeture est assurée en dessous du capotage 19, dont la fonction se limite désormais à interdire l'accès de l'embouchure aux salissures et aux particules de toute sorte qui risqueraient de s'introduire dans le tube lors de l'introduction ou du retrait de la tige.

Par ailleurs, à la différence de la plupart des jauges connues, cette fonction d'étanchéité est découplée, non seulement de la fonction de mise en butée de la tige dans sa position de référence à l'intérieur du guide, qui s'effectue au niveau de la butée de centrage, mais également d'une fonction de protection assurée en partie supérieure de l'embouchure par l'élément de capotage.

En dernier lieu, il faut souligner que grâce à l'invention, le fait que l'appui de la jauge sur la partie haute du guide ne soit pas réalisé sur un plan parallèle à celui de la nappe d'huile, n'a plus d'incidence sur la précision de la mesure.

## Revendications

1. Jauge de contrôle de niveau, notamment pour véhicule, comportant d'une part un guide de jauge tubulaire (1) présentant à son extrémité supérieure une embouchure (7), et d'autre part une tige de contrôle de niveau (2) comprenant un tronçon inférieur (12) de mesure raccordé par un tronçon supérieur (13) au moins partiellement incurvé à un embout de fermeture (14) du guide, **caractérisée en ce que** le guide (1) présente un au moins un épaulement intermédiaire (4) coopérant avec une butée (16) de la tige (2) pour assurer le centrage de celle-ci dans le guide.

2. Jauge de contrôle selon la revendication 1, **caractérisée en ce que** le guide (1) est constitué d'une seule pièce présentant entre ses extrémités un épaulement (4).

3. Jauge de contrôle selon la revendication 1, **caractérisée en ce que** le guide (1) est composé de deux pièces (1a, 1b) présentant un épaulement (4) au niveau de leur raccordement.

4. Jauge de contrôle selon la revendication 3, **caractérisée en ce que** l'épaulement (4) correspond à un élargissement (6) de la pièce inférieure (1a) du guide (1).

5. Jauge de contrôle selon la revendication 4, **caractérisée en ce que** la pièce supérieure (1b) du guide est emmanchée dans l'élargissement (6) de la partie inférieure (1a).

6. Jauge de contrôle selon l'une des revendications précédentes, **caractérisée en ce que** l'embout (14) porte un élément de capotage (19) pouvant coulisser le long de l'extrémité supérieure (8) de l'embouchure (7).

7. Jauge de contrôle selon l'une des revendications précédentes, **caractérisée en ce que** la tige (2) est souple sur au moins une partie de sa longueur.

8. Jauge de contrôle selon l'une des revendications précédentes, **caractérisé en ce que** la tige (2) porte à proximité de son extrémité supérieure un élément d'étanchéité (21) dont la position à l'intérieur du tube (1) suit celle de l'élément de capotage (19) sur l'extrémité (8 de l'embouchure (7).

9. Jauge de contrôle selon l'une des revendications précédentes, **caractérisé en ce que** la tige (2) présente au moins un élément additionnel de centrage (17) situé en dessous de la butée principale (16).

10. Jauge de contrôle selon la revendication 9, **caractérisée en ce que** les éléments de centrage (16, 17) présentent au moins trois lobes radiaux.
